# EUROPEAN PATENT APPLICATION

(11) **EP 4 761 257 A1**
(43) Date of publication of application: **17.06.2026**
(21) Application number: 24876210.6
(22) Date of filing: 07.08.2024
(51) Int. Cl.: H04N 23/55

(54) **CAMERA MODULE AND ELECTRONIC DEVICE**

(30) Priority: 13.10.2023 CN 202311331866
(71) Applicant: Honor Device Co., Ltd., Shenzhen, Guangdong 518040 (CN)
(72) Inventor: WANG, Weicheng, Shenzhen, Guangdong 518040 (CN)
(74) Representative: MERH-IP Matias Erny Reichl Hoffmann Patentanwälte PartG mbB
(86) International application number: PCT/CN2024/110418
(87) International publication number: WO 2025/077390

(57) **Abstract**

This application discloses a camera module and an electronic device, including a lens assembly, an image stabilization mechanism, a base, and a support structure. The lens assembly is configured to direct outgoing light to an image sensor. The image stabilization mechanism includes a movable stage and a mover assembly that are connected to each other, where the movable stage is configured to carry the lens assembly, and the mover assembly is configured to be capable of being electromagnetically driven, to drive the movable stage to move carrying the lens assembly. The base includes a bottom wall stacked with the movable stage. The support structures are disposed flat between opposite surfaces of the movable stage and the bottom wall, where the support structure can enable the movable stage to translate in any direction parallel to a plane of the bottom wall. In the camera module in this application, the quantity of parts of balls and tracks is also reduced, so that the camera module using the image stabilization mechanism can implement a light and thin design.

## Description

This application claims priority to Chinese Patent Application No. 202311331866.6, filed with the China National Intellectual Property Administration on October 13, 2023 and entitled "CAMERA MODULE AND ELECTRONIC DEVICE", which is incorporated herein by reference in its entirety.

### TECHNICAL FIELD

This application relates to the field of camera technologies, and more specifically, to a camera module having an optical image stabilization technology and an electronic device using the camera module.

### BACKGROUND

An optical image stabilization technology (Optical Image Stabilizer, OIS) aims to improve an image blurring problem caused by a body shake of a photographing device, and the working principle is to monitor a tiny shake of the body by using a gyroscope and transmit displacement information generated by the shake to a microprocessor. The microprocessor immediately calculates displacement that needs to be compensated for, and then enables an image stabilization drive assembly to move the lens or the image sensor in an opposite direction, to offset the displacement deviation that is between the lens and the image sensor and that is caused by the body shake, thereby effectively suppressing impact of the body shake on imaging of the photographing device. The current mainstream optical image stabilization technical solutions mainly include lens-shift image stabilization, image sensor shift image stabilization (Sensor Shift), and combination image stabilization of shift lens and image sensor.

In the current lens-shift image stabilization structure, a double-layer ball-type linear track is disposed between a movable stage and a base. The double-layer ball-type linear track includes an X-direction track and a Y-direction track that are stacked and balls located in the tracks, for guiding the movable stage to perform image stabilization compensation actions for X-direction displacement and Y-direction displacement.

However, because the double-layer ball-type linear track has a relatively large thickness size and uses a relatively large quantity of parts such as balls and tracks, the structure is also relatively complex, which is not conducive to achieving a light and thin design for the camera module.

### SUMMARY

The objective of this application is to provide a camera module and an electronic device. By disposing a support structure flat between opposite surfaces of a movable stage and a bottom wall, the movable stage can translate in any direction along the bottom wall, so that the thickness size of the camera module is reduced, and parts such as some balls and tracks are omitted, and the camera module can achieve a light and thin design.

According to a first aspect, this application provides a camera module, including a lens assembly, an image stabilization mechanism, a base, and a support structure.

The lens assembly is configured to direct outgoing light to an image sensor.

The image stabilization mechanism includes a movable stage and a mover assembly that are connected to each other, where the movable stage is configured to carry the lens assembly, and the mover assembly is configured to be capable of being electromagnetically driven, to drive the movable stage to move carrying the lens assembly.

The base includes a bottom wall stacked with the movable stage.

The support structure is disposed flat between opposite surfaces of the movable stage and the bottom wall, where the support structure can enable the movable stage to translate in any direction parallel to a plane of the bottom wall.

In the camera module in this application, when the support structure is a ball, because a track for limiting a rolling direction of the ball is not disposed, it can be ensured that the rolling direction of the ball is not restricted, so that the movable stage can translate in any direction along a plane parallel to the bottom wall by using the ball, thereby meeting an image stabilization compensation action for X-direction displacement and Y-direction displacement of the movable stage. Therefore, there is no need to design an X-direction track and a Y-direction track that are stacked and that have balls, and only a single layer of balls is required.

In the camera module in this application, when the support structure is a protrusion fixedly disposed on the movable stage or the bottom wall, the protrusion is slidably connected to the bottom wall or the movable stage, so that the movable stage slides on the bottom wall in any direction by using the protrusion, thereby meeting the image stabilization compensation action for X-direction displacement and Y-direction displacement of the movable stage. Therefore, there is no need to design an X-direction track and a Y-direction track that are stacked and that have balls, and only a single layer of protrusions is required.

It can be learned that when the image stabilization function structure of the camera module in this application is designed, regardless of whether the support structure is a protrusion or a ball, the thickness size is reduced compared with the double-layer ball-type linear track in the related technology, and the quantity of parts of the ball and track is also reduced. This allows the camera module using the image stabilization mechanism to achieve a light and thin design, and also simplifies the structure of the camera module, reducing the difficulty and cost of production.

In addition, the double-layer ball-type linear track in the related technology uses two layers of balls, namely, a relatively large quantity of balls. Therefore, relatively obvious ball shaking noise of the balls is made when the camera module is shaken. This reduces the texture of the electronic device using the camera module and affects user experience. On the contrary, when the support structure used in the camera module in this application is a protrusion, because the protrusion is fixedly disposed on the movable stage or the bottom wall, there is no problem of "shaking and noise of the ball" in the related technology. When the support structure used is a ball, because the ball is disposed flat in a single layer, the support structure has the advantage of fewer balls compared with the double-layer ball-type linear track in the related technology, and the corresponding generated shaking and noise of the ball can also be weakened. Therefore, the camera module in this application can weaken or even directly avoid shaking and noise of the ball. This improves product texture and ensures user experience.

In a possible design, the support structure includes a ball rollably disposed between the movable stage and the bottom wall.

When the ball is used as the support structure, rolling friction force with relatively small resistance may be enabled between the movable stage and the bottom wall.

In a possible design, a part that is of the bottom wall and that corresponds to the ball and/or a part that is of the movable stage and that corresponds to the ball have/has a reinforcement pad.

The reinforcement pad can effectively prevent pits from being formed through pressing at positions of contact between the movable stage and the bottom wall and the ball, to avoid a case in which the movable stage is stuck.

In a possible design, one of the bottom wall and the movable stage has an accommodation groove limiting the ball.

The accommodation groove is configured to: conveniently position and mount the ball and prevent the ball from being dislocated due to vibration or falling of the camera module.

In a possible design, the accommodation groove is provided on the movable stage, and the accommodation groove is formed by recessing a surface of the movable stage.

The accommodation groove is formed by recessing the surface of the movable stage. This not only provides mounting space for the ball, but also reduces dead weight of the movable stage, so that the movable stage can be electromagnetically driven with relatively low load, thereby further reducing design difficulty of the image stabilization mechanism.

In a possible design, the support structure includes a protrusion, the protrusion is fixedly disposed on one of the bottom wall and the movable stage, and the other is slidably connected to the protrusion.

The protrusion can push open a movable gap between the bottom wall and the movable stage, to ensure relatively small sliding friction resistance between the bottom wall and the movable stage.

In a possible design, the protrusion is fixedly disposed on the bottom wall, and the movable stage is slidably connected to the protrusion.

The protrusion is fixedly disposed on the bottom wall instead of being disposed on the movable stage, so that dead weight of the movable stage can be reduced, and the movable stage can be electromagnetically driven with relatively low load, thereby further reducing design difficulty of the image stabilization mechanism.

In a possible design, a material of the protrusion is a self-lubricating material.

The protrusion is made of the self-lubricating material, so that friction resistance when the protrusion slides on the movable stage or the bottom wall can be reduced, thereby reducing energy loss of the image stabilization mechanism and improving flexibility of the movable stage during translation.

In a possible design, the mover assembly includes a magnetic assembly fixedly disposed on the movable stage, and the bottom wall is provided with a magnetic mating component attracted by the magnetic assembly.

When the magnetic mating component is attracted by the magnetic assembly, use of fragile structures such as a suspension wire can be avoided and image stabilization displacement compensation can be accurately implemented on the lens assembly.

In a possible design, projections of the magnetic assembly and the magnetic mating component on a surface of the bottom wall at least partially overlap.

In this way, attraction force of the magnetic assembly to the magnetic mating component is longitudinally directed, to avoid occurrence of a lateral force component that causes the movable stage to deflect.

In a possible design, the magnetic mating component is embedded inside the bottom wall.

A surface of the bottom wall can be ensured to be smooth and free of a foreign matter, to prevent the image stabilization mechanism from interfering with and obstructing the movable stage when performing the optical image stabilization function. In addition, embedding the magnetic mating component inside the bottom wall also has the effect of strengthening and toughening the base, thereby improving the mechanical strength and service life of the base.

In a possible design, the image stabilization mechanism further includes a stator assembly, the stator assembly includes an X-direction electromagnetic coil and a Y-direction electromagnetic coil disposed on two adjacent sides of the base, and the X-direction electromagnetic coil and the Y-direction electromagnetic coil are located on a periphery of the movable stage; and
the magnetic assembly includes an X-direction magnetic member and a Y-direction magnetic member, where the X-direction magnetic member is disposed on a side that is of the movable stage and that faces the X-direction electromagnetic coil, and the Y-direction magnetic member is disposed on a side that is of the movable stage and that faces the Y-direction electromagnetic coil.

In this way, the magnetic assembly has a dual role, not only for attracting the magnetic mating component to connect the movable stage to the base, but also as an electromagnetic induction magnet for being electromagnetically driven to drive the movable stage to translate.

In a possible design, the mover assembly further includes first magnetic conductive sheets, and two first magnetic conductive sheets are respectively fixedly disposed on the X-direction magnetic member and the Y-direction magnetic member.

Magnetic field strengths of the X-direction magnetic member and the Y-direction magnetic member can be enhanced, making the X-direction magnetic member and the Y-direction magnetic member more sensitive when being electromagnetically driven.

In a possible design, the camera module further includes an elastic member, configured to elastically connect the movable stage to the base.

The movable stage can be enabled to elastically reset in the middle of the base, to maintain the lens assembly near the center of the optical axis.

In a possible design, the base further includes a column fixedly disposed at a corner position of the bottom wall, and the elastic member is lamellar and two ends of the elastic member are respectively connected to the column and the movable stage.

The lamellar elastic member can be conveniently connected to the column and the movable stage.

Optionally, in addition to the function of resetting the movable stage in the middle of the base, the elastic member can also provide longitudinal supporting force for the movable stage and the base, to prevent the movable stage and the base from separating from each other.

In a possible design, the camera module further includes a suspension wire, where two ends of the suspension wire are respectively connected to the bottom wall and the elastic member.

Determining or adjustment is performed by adjusting the thickness and the length of the suspension wire, so that the corresponding design difficulty is relatively low.

In a possible design, the camera module further includes: a focusing mechanism, where the focusing mechanism includes a focusing driver chip, and the focusing driver chip is electrically connected to a pin disposed on the bottom wall sequentially through the movable stage, the elastic member, and the base.

This meets the power supply requirement and data transmission requirement of the focusing driver chip, and conveniently electrically connects the focusing driver chip to an external control main board.

In a possible design, the focusing driver chip is disposed on a circuit board, conductive members are respectively embedded in the movable stage and the base, the elastic member is provided with a conductive member, and the circuit board, the conductive member of the movable stage, the conductive member of the elastic member, the conductive member of the base, and the pin are electrically connected in sequence.

Conductive circuits can all be located inside the parts or attached to the surface to prevent the conductive circuits from extending outward and causing interference and obstruction to the image stabilization and focusing mechanisms.

In a possible design, the single elastic member has a plurality of conductive members.

In this way, two to four circuits can be integrated by using a single elastic member, to prevent the internal conductive members of the movable stage and the base from being dispersed, thereby reducing the difficulty of producing and processing the conductive members embedded in the movable stage and the base.

In a possible design, a wear-resistant coating is disposed on a surface of the protrusion.

In a possible design, the self-lubricating material includes at least one of polytetrafluoroethylene, polyformaldehyde, polycarbonate, and polyamide.

In a possible design, a material of the reinforcement pad is carbon fiber or metal.

In a possible design, the support structure is distributed at the corner position of the bottom wall.

According to a second aspect, this application further provides an electronic device, including a case and the camera module according to any one of the foregoing designs. The camera module is mounted inside the case.

The electronic device in this application uses the foregoing camera module. When the image stabilization function structure of the camera module is designed, regardless of whether the support structure is a protrusion or a ball, the thickness size is reduced compared with the double-layer ball-type linear track in the related technology, and the quantity of parts of the ball and track is also reduced. This allows the camera module using the image stabilization mechanism to have a relatively small thickness size, which can meet the development trend of a light and thin design and miniaturization of the electronic device, but also reduces production costs. In addition, when the support structure used in the camera module is a protrusion, because the protrusion is fixedly disposed on the movable stage or the bottom wall, there is no problem of "ball shaking and noise" in the related technology. When the support structure used is a ball, because the ball is disposed flat in a single layer, the support structure has the advantage of fewer balls compared with the double-layer ball-type linear track in the related technology, and the corresponding ball shaking and noise generated can also be weakened. Therefore, the electronic device in this application can weaken or even directly avoid shaking and noise of the ball. This improves product texture and ensures user experience.

### BRIEF DESCRIPTION OF DRAWINGS

FIG. 1 is a diagram of a lens-shift image stabilization structure in the related technology;
FIG. 2 is a diagram of a smartphone according to an embodiment of this application;
FIG. 3 is a diagram of a camera module according to an embodiment of this application;
FIG. 4 is a diagram of another viewing angle of the camera module in FIG. 2;
FIG. 5 is an exploded view of the camera module in FIG. 3;
FIG. 6 is an exploded view of the camera module in FIG. 4;
FIG. 7 is a diagram of a camera module after a housing is hidden according to an embodiment of this application;
FIG. 8 is a cross-sectional diagram along A-A in FIG. 7;
FIG. 9 is an enlarged view of an example at D in FIG. 8;
FIG. 10 is a diagram of an example of a movable stage according to an embodiment of this application;
FIG. 11 is a diagram of an example of a base according to an embodiment of this application;
FIG. 12 is a diagram of another example of a base according to an embodiment of this application;
FIG. 13 is an enlarged view of another example at D in FIG. 8;
FIG. 14 is a diagram of another example of a movable stage according to an embodiment of this application;
FIG. 15 is a cross-sectional diagram along B-B in FIG. 7;
FIG. 16 is an enlarged view at E in FIG. 15;
FIG. 17 is a cross-sectional diagram along C-C in FIG. 7;
FIG. 18 is an enlarged view at F in FIG. 17;
FIG. 19 is a diagram of separation between a base and a movable stage according to an embodiment of this application;
FIG. 20 is a diagram of assembly of the base and the movable stage in FIG. 19;
FIG. 21 is an enlarged view of an example at G in FIG. 20;
FIG. 22 is an enlarged view of another example at G in FIG. 20; and
FIG. 23 is a diagram of another example of a base according to an embodiment of this application.

Reference numerals:
10: lens assembly;
20: image stabilization mechanism; 21: movable stage; 211: accommodation groove; 22: mover assembly; 221: X-direction magnetic member; 222: Y-direction magnetic member; 223: first magnetic conductive sheet; 23: stator assembly; 231: X-direction electromagnetic coil; 232: Y-direction electromagnetic coil;
30: base; 31: bottom wall; 311: pin; 312: magnetic mating component; 32: column;
40: support structure; 41: protrusion; 42: ball; 421: reinforcement pad; 50: elastic member;
60: focusing mechanism; 61: focusing driver chip; 611: circuit board; 62: lens holder; 63: Z-direction electromagnetic coil; 64: Z-direction magnetic member; 65: second magnetic conductive sheet; 66: guide post;
70: suspension wire; 80: housing; 90: track;
100: camera module; 200: case; 201: middle frame; 202: rear cover; 300: display.

### DESCRIPTION OF EMBODIMENTS

The following describes possible related content in embodiments of this application by using examples. It is clear that the described embodiments are merely some but not all of embodiments of this application.

In the description of this application, it should be noted that, unless otherwise expressly specified and limited, the terms "mount", "connected", and "connection" should be understood broadly, and may be, for example, a fixed connection, a detachable connection, or an integral connection; may be a mechanical connection, or an electrical connection or communication with each other; may be a direct connection, or an indirect connection by using an intermediate medium, or a connection between interiors of two elements or interaction relationships between the two elements. A person of ordinary skill in the art may understand specific meanings of the foregoing terms in this application based on specific situations.

In the description of this application, it should be understood that the terms "upper", "lower", "side", "inside", "outside", "top", "bottom", and the like indicate orientations or positional relationships based on mounting, and are only for the convenience of describing this application and simplifying the description, rather than indicating or implying that the apparatus or element referred to must have a specific orientation, be constructed and operated in a specific orientation, and therefore should not be understood as a limitation on this application.

It should be further noted that, in the embodiments of this application, a same reference sign represents a same component or a same part. For the same part in the embodiments of this application, a reference sign may be marked in a figure by using only one part or component as an example. It should be understood that, the reference sign is also applicable to another same part or component.

In the description of this application, it should be noted that, the term "and/or" describes only an association relationship between associated objects, and indicates that three relationships may exist. For example, A and/or B may represent three cases: Only A exists, both A and B exist, and only B exists.

When a user shoots a photo by using a photographing device such as a mobile phone, at a moment a shutter button is pressed, light passes through a lens into an image sensor, and the image sensor implements imaging after collecting the light. Usually, the user shoots a photo by holding the photographing device, and a body shake is inevitably generated, resulting in displacement deviation between the lens and the image sensor. This may cause the image sensor to receive different light at a same position and superimpose the light, resulting in a blurred final image.

It is easy to experience the problem caused by the body shake in a low light shooting scene. When the user shoots a photo at night, if a mobile phone without optical image stabilization is not used, it is found that the shot photo is easily blurred. This is because in a low light environment, the mobile phone usually reduces the shutter speed to obtain a larger amount of incoming light. This is equivalent to amplifying the problem caused by the shake. At this time, slight shaking can easily cause blurred photos.

In addition to shooting a photo, shooting a video is also be affected by the body shake. The body shake causes the continuity and stability of the video image to decrease, especially when the user is walking or exercising. In such a shooting scene with severe shaking, an excessively large image shaking amplitude causes the video quality to plummet, and the video content cannot even be seen clearly.

The emergence of the optical image stabilization technology is to improve an image blurring problem caused by the body shake of the photographing device. A working principle is to monitor a tiny shake of the body by using a gyroscope and transmit displacement information generated by the shake to a microprocessor. The microprocessor immediately calculates displacement that needs to be compensated for, and then enables an image stabilization drive assembly to move the lens or the image sensor in an opposite direction, to offset the displacement deviation that is between the lens and the image sensor and that is caused by the body shake, thereby effectively suppressing impact of the body shake on imaging of the photographing device. The current mainstream optical image stabilization technical solutions mainly include lens-shift image stabilization, image sensor shift image stabilization, and combination image stabilization of shift lens and image sensor.

Lens-shift image stabilization is to design a lens assembly inside a photographing device to be movable, so that the lens assembly can be pushed by using a motor or a memory metal mechanical structure to move, to achieve the image stabilization effect.

Image sensor shift image stabilization is to suppress the body shake by moving an image sensor, and also to make a shaking optical path to fall into an original position. Because the image sensor is moved, a light refraction problem of a lens does not need to be considered. Compared with the bulky lens assembly, moving the image sensor is much easier, and can achieve more a flexible and agile movement response, thereby improving image stabilization performance.

Combination image stabilization of shift lens and image sensor is to combine lens-shift image stabilization and image sensor shift image stabilization that are mentioned above. This is equivalent to having dual image stabilization technologies, and the actual image stabilization effect is greatly improved.

In the current lens-shift image stabilization structure, a movable stage for carrying a lens and a focusing mechanism is suspended above a base by using an elastic suspension element. The function of the elastic suspension element is to form particular longitudinal supporting force (a longitudinal direction may be understood as an optical axis direction of the lens assembly, or a thickness direction or a Z direction below) and lateral reset force (a lateral direction may be understood as a radial direction of the lens assembly) on the overall structure, so that the lens, the focusing mechanism, and other components including the movable stage are constrained above the base, and the lens is maintained near the center of the optical axis without being subject to force.

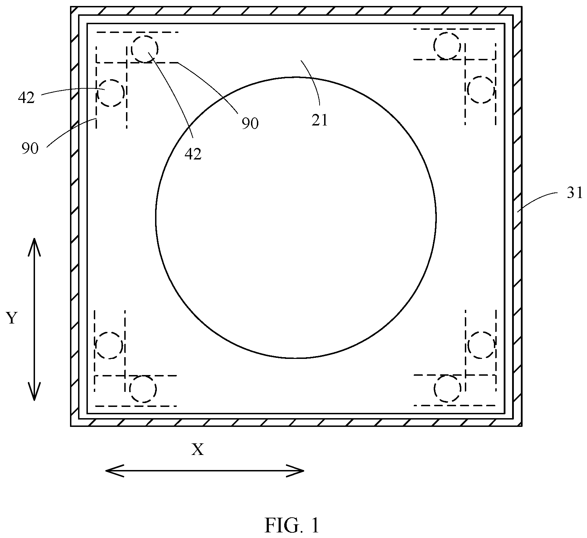

FIG. 1 is a diagram of a lens-shift image stabilization structure in the related technology. As shown in FIG. 1, in the foregoing lens-shift image stabilization structure, a double-layer ball-type linear track is disposed between a movable stage 21 and a base 30. The double-layer ball-type linear track includes an X-direction track 90 and a Y-direction track 90 that are stacked and balls 42 located in the tracks 90, for guiding the movable stage 21 to perform image stabilization compensation actions for X-direction displacement and Y-direction displacement.

However, because the double-layer ball-type linear track has a relatively large thickness size and uses a relatively large quantity of parts such as balls 42 and tracks 90, the structure is also relatively complex. As a result, an overall thickness of the camera module 100 using the image stabilization function structure is relatively large. This is not conducive to achieving a light and thin design, and production costs are relatively high.

In conclusion, how to reduce the thickness size of the image stabilization function structure and simplify the structure of the image stabilization function structure is one of the technical problems to be resolved in the current field of camera modules.

Therefore, to resolve the foregoing technical problems, this application provides a camera module and an electronic device. By disposing a support structure flat between opposite surfaces of a movable stage and a bottom wall, the movable stage can translate in any direction along the bottom wall, so that the thickness size of the camera module is reduced, and parts such as some balls and tracks are omitted, and the camera module can achieve a light and thin design.

An embodiment of this application first provides an electronic device. The electronic device may also be referred to as a mobile device, a terminal device, a mobile terminal, or a terminal. The electronic device includes but is not limited to a handheld device, an in-vehicle device, a wearable device, a computing device, or other processing devices connected to a wireless modem. For example, the electronic device may include a smart watch (smart watch), a smart wristband (smart wristband), a smart phone (smart phone), a personal digital assistant (personal digital assistant, PDA) computer, a tablet computer, a notebook computer, an in-vehicle computer, smart glasses (smart glasses), a game console, and another electronic device with a camera that requires a camera image stabilization design.

To more conveniently describe the electronic device provided in this embodiment of this application, as an example rather than a limitation, the following describes the technical solutions in this application in detail by using an example in which the electronic device is a smartphone.

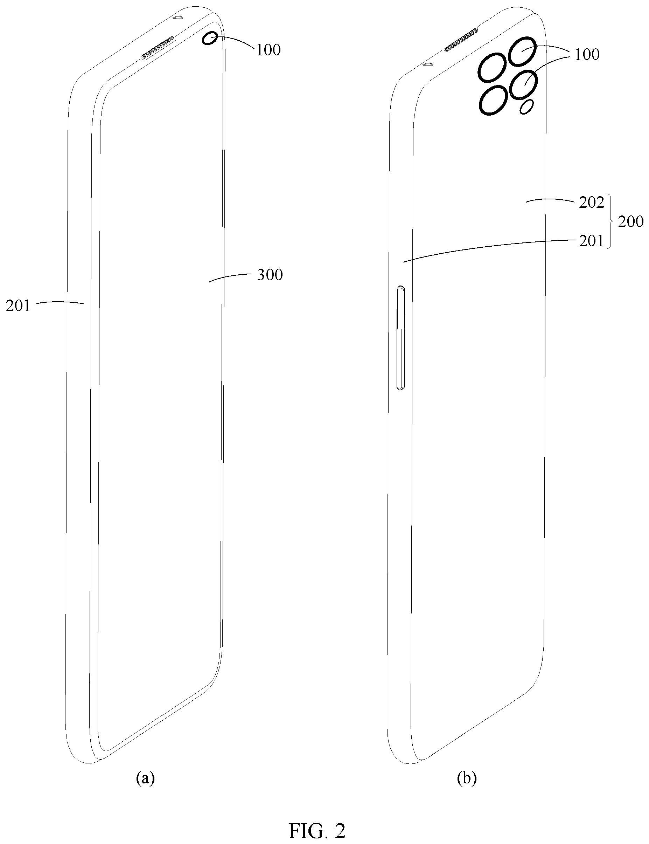

FIG. 2 is a diagram of a smartphone according to an embodiment of this application. (a) in FIG. 2 is a diagram of a front side of a smartphone according to an embodiment of this application. (b) in FIG. 2 is a diagram of a back side of a smartphone according to an embodiment of this application.

As shown in FIG. 2, the smartphone provided in this embodiment of this application includes a display 300, a case 200, and a camera module 100. The case 200 further includes a middle frame 201 and a rear cover 202. The middle frame 201 is a hollow ring-shaped structure. The display 300 is fixedly disposed on a front end surface of the middle frame 201, and the rear cover 202 is fixedly disposed on a rear end surface of the middle frame 201. The display 300, the middle frame 201, and the rear cover 202 together define an accommodation space of the smartphone. The accommodation space is used to mount various functional elements of the smartphone, such as the camera module 100 and other functional elements such as a battery, a microphone, and a processor in the following embodiment.

Optionally, the rear cover 202 may be covered on the middle frame 201 through screwing, snapping, or another manner. A seal ring may be provided between the rear cover 202 and the middle frame 201 to improve sealing and waterproof effect of a joint between the rear cover 202 and the middle frame 201. The seal ring may be made of highly elastic materials such as silicone or rubber.

Optionally, the camera module 100 may be used in a rear-facing camera, or may be used in a front-facing camera. For example, as shown in (a) in FIG. 2, on the front side of the smartphone, the camera module 100 is used for the front-facing camera.

A high-magnification zoom of rear-facing cameras of smartphones currently on the market is basically a "jump-type" zoom. To be specific, a hybrid optical zoom is achieved by carrying two or more lenses with different focal lengths and combining the lenses with an algorithm-based digital zoom.

Therefore, the quantity of camera modules 100 mounted is not limited to one, and may be two or even more. For example, as shown in (b) in FIG. 2, four camera modules 100 are mounted on the back side of the smartphone. To be specific, the quantity of camera modules 100 mounted is not limited in this embodiment of this application.

In order not to affect the appearance of the smartphone and to protect the camera, the smartphone further includes a camera decoration (Deco), which is a hollow shell-shaped decoration made of a metal or plastic material.

In addition, the smartphone may further include: a processor, a universal serial bus (universal serial bus, USB) interface, a charging management module, a power management module, a battery, a microphone, a mobile communication module, an antenna, a wireless communication module, an audio module, a headset jack, a sensor module, a button, a camera, a subscriber identity module (subscriber identification module, SIM) card interface, and other functional elements.

These functional elements may be modified based on user requirements. It may be understood that the specific embodiment described above is merely a specific implementation of this application. Other manners to implement the solutions of this application also fall within the protection scope of this application. Details are not described herein.

The camera module 100 provided in this application is described in detail with reference to the accompanying drawings.

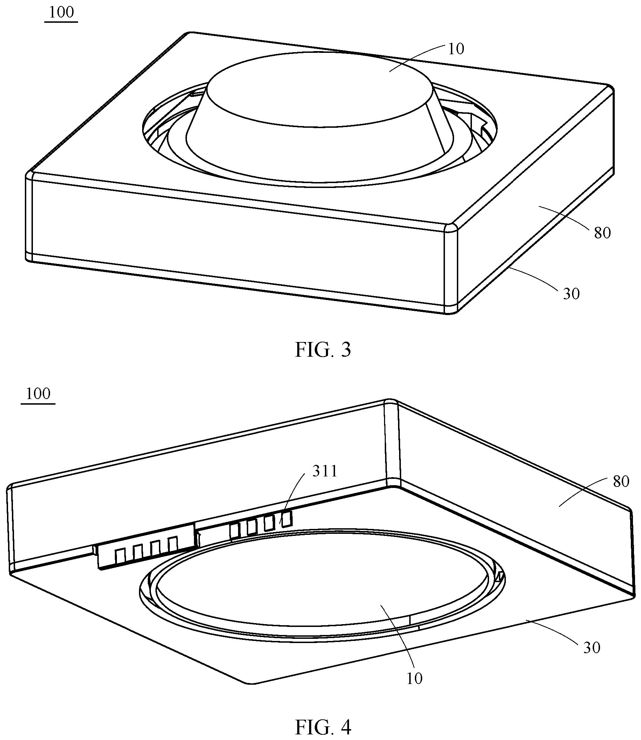

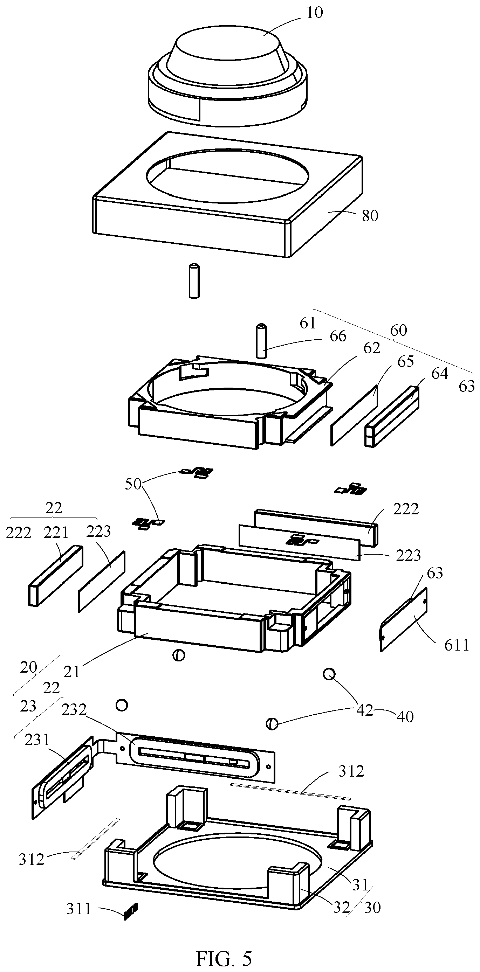

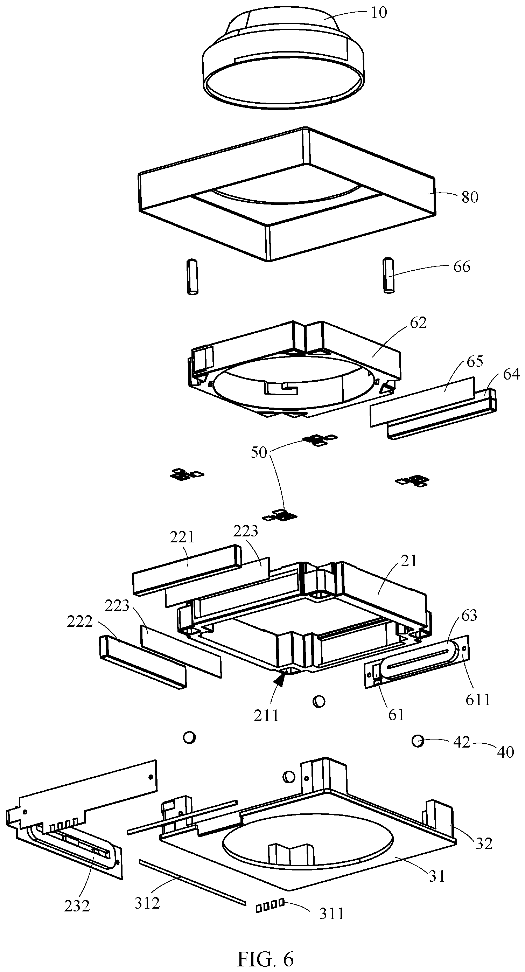

FIG. 3 is a diagram of a camera module 100 according to an embodiment of this application. FIG. 4 is a diagram of another viewing angle of the camera module 100 in FIG. 2. FIG. 5 is an exploded view of the camera module 100 in FIG. 3. FIG. 6 is an exploded view of the camera module 100 in FIG. 4.

As shown in FIG. 3 to FIG. 6, a camera module 100 provided in this embodiment of this application includes a lens assembly 10, an image stabilization mechanism 20, a base 30, and a support structure 40. In addition, the camera module 100 further includes an image sensor (not drawn in the figure), a focusing mechanism 60, and a housing 80.

The housing 80 is connected to the base 30, and the housing 80 and the base 30 together define an accommodation space. The accommodation space is used to mount the image stabilization mechanism 20, the support structure 40, the focusing mechanism 60, and the like. The housing 80 is also provided with a lens telescopic hole for avoiding the lens assembly 10.

The lens assembly 10 is configured to direct outgoing light to an image sensor, to be specific, configured to form an optical signal of a shot object and reflect the optical signal to the image sensor. The lens assembly 10 may be formed by a plurality of spherical or aspherical lenses and has optical properties.

The image sensor may be mounted on the base 30, or may be mounted on a bracket of another component. The image sensor is configured to receive the outgoing light of the lens assembly 10. To be specific, the image sensor is configured to perform photoelectric conversion and analog signal/digital signal (Analog/Digital, A/D) conversion on the optical signal corresponding to the shot object, thereby outputting image data for display on a display unit such as the display 300. Optionally, the image sensor includes but is not limited to a complementary metal-oxide semiconductor (Complementary Metal-Oxide Semiconductor, CMOS) image sensor, a charge coupled device (Charge Coupled Cevice, CCD) image sensor, and the like.

The image stabilization mechanism 20 includes a movable stage 21 and a mover assembly 22 that are connected to each other, where the movable stage 21 is configured to carry the lens assembly 10 and the focusing mechanism 60, and the mover assembly 22 is configured to be capable of being electromagnetically driven, to drive the movable stage 21 to move carrying the lens assembly 10 and the focusing mechanism 60, to implement an optical image stabilization function of the lens assembly 10.

The image stabilization mechanism 20 further includes a stator assembly 23 disposed around the mover assembly 22, and the stator assembly 23 provides electromagnetic driving force for the mover assembly 22 mentioned above. For more detailed descriptions of the image stabilization mechanism 20, refer to the following embodiment.

The movable stage 21 is a ring frame structure with a hollow middle portion, and the focusing mechanism 60 is mounted in the hollow middle portion of the movable stage 21. The focusing mechanism 60 can drive the lens assembly 10 to move in an optical axis direction. To be specific, the lens assembly 10 can extend and retract within the movable stage 21, so that a distance between the lens assembly 10 and the image sensor is adjusted, thereby implementing the focusing function. For more detailed descriptions of the focusing mechanism 60, refer to the following embodiment.

The base 30 includes a bottom wall 31 stacked with the movable stage 21.

The support structure 40 is disposed flat between opposite surfaces of the movable stage 21 and the bottom wall 31, where the support structure 40 can enable the movable stage 21 to translate in any direction parallel to a plane of the bottom wall 31.

It should be noted that, that the support structure 40 is disposed flat means that a layer of the support structure 40 is distributed along the lower surface of the movable stage 21, or that a layer of the support structure 40 is distributed along the upper surface of the bottom wall 31. To be specific, the support structure 40 is distributed in only one layer between the movable stage 21 and the bottom wall 31.

Optionally, the support structure 40 used in this embodiment of this application may be a ball 42 rollably disposed between the movable stage 21 and the bottom wall 31, or may be a protrusion 41 fixedly disposed on either the movable stage 21 or the bottom wall 31.

When the support structure 40 is a ball 42, because a track 90 for limiting a rolling direction of the ball 42 is not disposed, it can be ensured that the rolling direction of the ball 42 is not restricted, so that the movable stage 21 can translate in any direction along a plane parallel to the bottom wall 31 by using the ball 42, thereby meeting an anti-shake compensation action for X-direction displacement and Y-direction displacement of the movable stage 21. Therefore, there is no need to design an X-direction track 90 and a Y-direction track 90 that are stacked and that have balls 42. The ball 42 in this embodiment of this application is disposed flat between opposite surfaces of the movable stage 21 and the bottom wall 31. To be specific, only a single layer of balls 42 is required.

When the support structure 40 is a protrusion 41 fixedly disposed on the movable stage 21 or the bottom wall 31, the protrusion 41 is slidably connected to the bottom wall 31 or the movable stage 21, so that the movable stage 21 slides on the bottom wall 31 in any direction by using the protrusion 41, thereby meeting the image stabilization compensation action for X-direction displacement and Y-direction displacement of the movable stage 21. Therefore, there is no need to design an X-direction track 90 and a Y-direction track 90 that are stacked and that have balls 42. The protrusion 41 in this embodiment of this application is disposed flat between opposite surfaces of the movable stage 21 and the bottom wall 31. To be specific, only a single layer of protrusions 41 is required.

It can be learned that when the image stabilization function structure of the camera module 100 in this embodiment of this application is designed, regardless of whether the support structure 40 is a protrusion 41 or a ball 42, the thickness size is reduced compared with the double-layer ball-type linear track in the related technology, and the quantity of parts of the ball 42 and track 90 is also reduced. This allows the camera module 100 using the image stabilization mechanism 20 to achieve a light and thin design, and also simplifies the structure of the camera module 100, reducing the difficulty and cost of production.

In addition, the double-layer ball-type linear track in the related technology uses two layers of balls 42, namely, a relatively large quantity of balls 42. Therefore, relatively obvious ball shaking noise of the balls 42 is made when the camera module 100 is shaken. This reduces the texture of the electronic device using the camera module 100 and affects user experience. On the contrary, when the support structure 40 used in the camera module 100 in this embodiment of this application is a protrusion 41, because the protrusion 41 is fixedly disposed on the movable stage 21 or the bottom wall 31, there is no problem of "shaking and noise of the ball 42" in the related technology. When the support structure 40 used is a ball 42, because the ball 42 is disposed flat in a single layer, the support structure has the advantage of fewer balls 42 compared with the double-layer ball-type linear track in the related technology, and the corresponding generated shaking and noise of the ball 42 can also be weakened. Therefore, the camera module 100 in this embodiment of this application can weaken or even directly avoid shaking and noise of the ball 42. This improves product texture and ensures user experience.

As mentioned above, the lens-shift image stabilization function structure in the current related technology is to suspend the movable stage 21 for carrying the lens and the focusing mechanism 60 above the base 30 by using an elastic suspension element. In this embodiment of this application, an elastic suspension element may also be used to connect the movable stage 21 and the base 30 together; or, a magnetic attraction manner may be used to connect the movable stage 21 and the base 30 together; or, a combination of an elastic suspension element and a magnetic attraction manner may be used to connect the movable stage 21 and the base 30 together. For more detailed descriptions, refer to the following embodiment.

Optionally, the camera module 100 further includes a filter. The filter is disposed between the lens assembly 10 and the image sensor. The filter is configured to filter out stray light, so that imaging quality of the lens assembly 10 on the image sensor can be further improved.

Optionally, the camera module 100 further includes a filter holder, an aperture is provided in the middle of the filter holder, and on a side close to the lens assembly 10, an opening of the aperture is recessed inward to form a groove, and the filter is fixedly disposed in the groove.

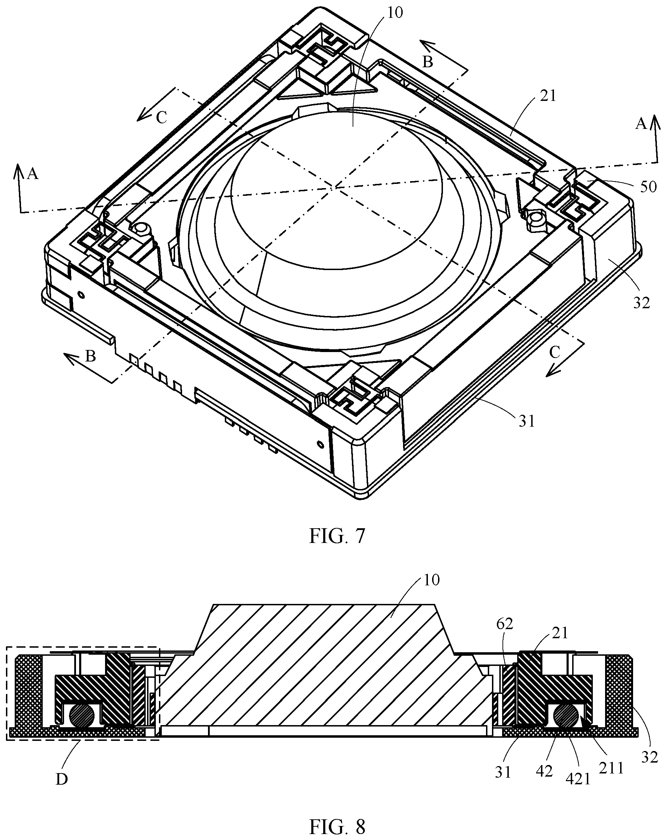

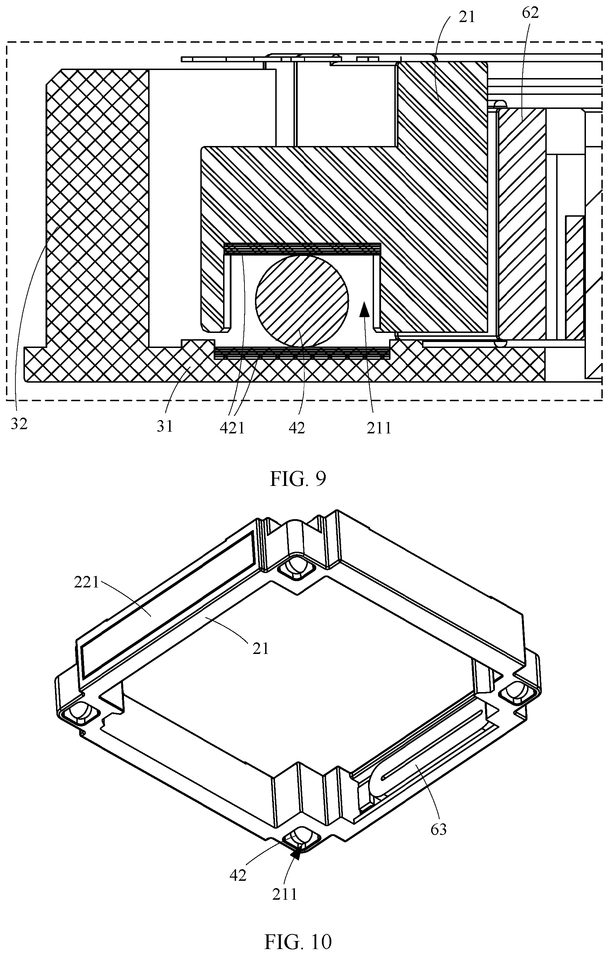

FIG. 7 is a diagram of a camera module 100 after a housing 80 is hidden according to an embodiment of this application. FIG. 8 is a cross-sectional diagram along A-A in FIG. 7. FIG. 9 is an enlarged view of an example at D in FIG. 8.

As described above, the support structure 40 used in this embodiment of this application may be a single layer of balls 42, that is, as an embodiment provided in this application, as shown in FIG. 7 to FIG. 9, the support structure 40 includes balls 42 rollably disposed between the movable stage 21 and the bottom wall 31.

In this embodiment, the support structure 40 is designed as the ball 42, so that friction resistance generated when relative translation occurs between the movable stage 21 and the bottom wall 31 is relatively small rolling friction resistance, to ensure flexibility of the movable stage 21 during movement, and reduce the difficulty and load when the mover assembly 22 is electromagnetically driven, thereby reducing the design difficulty of the image stabilization mechanism 20.

As mentioned above, because the lens assembly 10 is usually formed by a plurality of spherical or aspherical lenses with optical properties, the lens assembly 10 is relatively bulky, making the load on the movable stage 21 relatively large. When using the flat single-layer ball 42, parts that of the movable stage 21 and the bottom wall 31 and that are in contact with the ball 42 may be pressed into pits, affecting the rolling effect of the ball 42, and further causing the movable stage 21 to be stuck.

Therefore, to resolve the foregoing problem, as shown in FIG. 9, in an embodiment provided in this application, a part that is of the bottom wall 31 and that corresponds to the ball 42 and/or a part that is of the movable stage 21 and that corresponds to the ball 42 have/has a reinforcement pad 421.

In this embodiment, when the reinforcement pad 421 uses a material with relatively high hardness, pits can be effectively prevented from being formed through pressing at positions of contact between the movable stage 21 and the bottom wall 31 and the ball 42.

In addition, because the reinforcement pad 421 is added only to the parts that are of the bottom wall 31 and the movable stage 21 and that correspond to the ball 42, the other parts of the base 30 and the movable stage 21 may use plastic materials with relatively low hardness, relatively low costs, and relatively low processing difficulty, thereby reducing the overall manufacturing costs of the movable stage 21 and the base 30 when ensuring that local hardness is relatively strong.

Optionally, when the base 30 and the movable stage 21 are made of plastic, polyvinyl chloride (polyvinyl chloride, PVC), polyethylene (Polyethylene, PE), polypropylene (Polypropylene, PP), and the like may be used.

In an embodiment provided in this application, a material of the reinforcement pad 421 is carbon fiber or metal.

Specifically, the carbon fiber material has higher hardness than conventional plastic materials. Even a relatively thin carbon fiber reinforcement pad 421 can support the ball 42 without being pressed into a pit.

Specifically, the metal in this embodiment may be a metallic simple substance or alloy. Higher Brinell hardness can be achieved by using an alloy. For example, by adding elements such as manganese (Mn), chromium (Cr), and tungsten (W) to a steel pad, the strength of an alloy pad obtained can be improved, and the ball 42 can be supported when the alloy pad is relatively thin, and no pit is formed through pressing.

Optionally, when the base 30 or the movable stage 21 is made of plastic, the carbon fiber or metal reinforcement pad 421 may be molded on the base 30 or the movable stage 21 through insert molding.

Optionally, when the reinforcement pad 421 is fixedly connected to the bottom wall 31 or the movable stage 21, the connection may alternatively be bonding by using an adhesive, locking by using screws, insertion by using a socket and spigot structure, or snapping by using a snap-fit structure, or a groove is provided on an opposite surface of the bottom wall 31 or the movable stage 21, and the reinforcement pad 421 is embedded and fastened in the groove.

To conveniently position and mount the ball 42 and prevent the ball 42 from being dislocated due to vibration or falling of the camera module 100, optionally, one of the bottom wall 31 and the movable stage 21 has an accommodation groove 211 limiting the ball 42, as described in the following embodiments.

In an embodiment provided in this application, the part that is of the movable stage 21 and that corresponds to the ball 42 has the accommodation groove 211 limiting the ball 42.

Optionally, the accommodation groove 211 may be formed by recessing a surface of the movable stage 21; or the accommodation groove 211 may alternatively be formed by enclosing a convex block protruding from the surface of the movable stage 21.

FIG. 10 is a diagram of an example of a movable stage 21 according to an embodiment of this application.

As shown in FIG. 10, in an embodiment provided in this application, when the accommodation groove 211 is provided on the movable stage 21, the accommodation groove 211 is formed by recessing a surface of the movable stage 21.

Because the movable stage 21 itself has a particular thickness, it is ensured that the focusing mechanism 60 has a sufficient moving stroke in the thickness direction, to meet the focusing design requirement of the lens assembly 10. Therefore, the part that is of the movable stage 21 and that corresponds to the ball 42 also has a particular thickness. The accommodation groove 211 is formed by recessing the surface of the movable stage 21. This not only provides mounting space for the ball 42, but also reduces dead weight of the movable stage 21, so that the movable stage 21 can be electromagnetically driven with relatively low load, thereby further reducing design difficulty of the image stabilization mechanism 20.

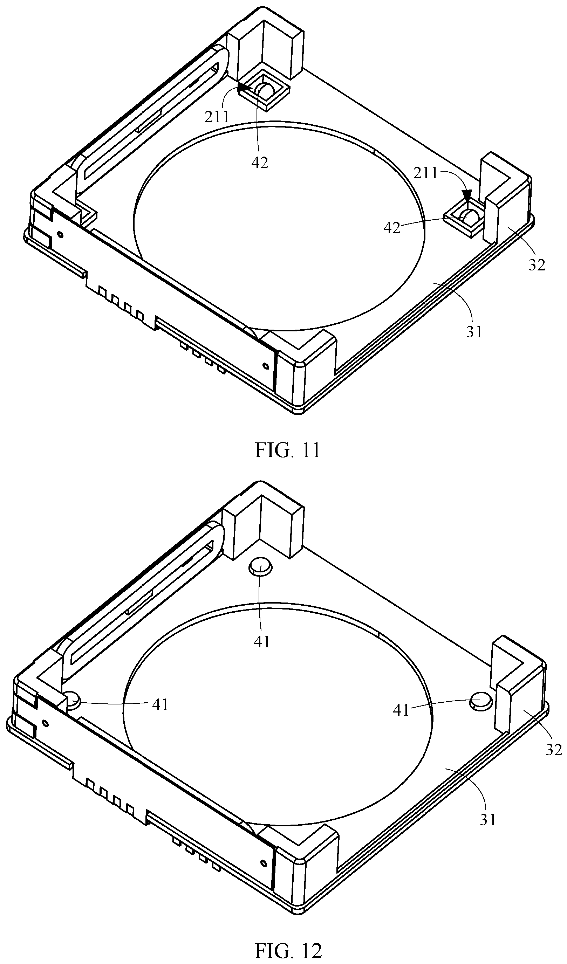

FIG. 11 is a diagram of an example of a base 30 according to an embodiment of this application.

As shown in FIG. 11, in an embodiment provided in this application, the part that is of the bottom wall 31 and that corresponds to the ball 42 has the accommodation groove 211 limiting the ball 42.

Because the bottom wall 31 itself has a relatively small thickness and has no condition of being recessed into a groove, the groove may be formed by enclosing the convex block protruding from the surface of the bottom wall 31. Certainly, if the bottom wall 31 is thickened, a recessed groove may also be formed.

As mentioned above, the support structure 40 may alternatively be the protrusion 41 fixedly disposed on either the movable stage 21 or the bottom wall 31, as described in the following embodiments.

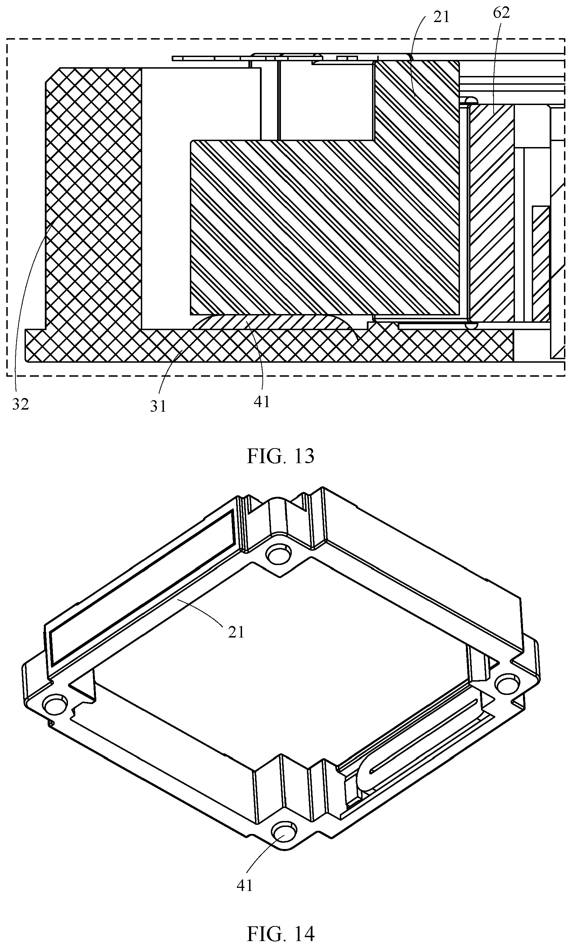

FIG. 12 is a diagram of another example of a base 30 according to an embodiment of this application. FIG. 13 is an enlarged view of another example at D in FIG. 8.

As shown in FIG. 12 and FIG. 13, in an embodiment provided in this application, the protrusion 41 is fixedly disposed on the bottom wall 31, and the movable stage 21 is slidably connected to the protrusion 41 toward the surface of the bottom wall 31.

In this embodiment, when the support structure 40 is formed by the protrusion 41, the protrusion 41 is fixedly disposed on the bottom wall 31 instead of being disposed on the movable stage 21, so that dead weight of the movable stage 21 can be reduced, and the movable stage 21 can be electromagnetically driven with relatively low load, thereby further reducing design difficulty of the image stabilization mechanism 20.

Certainly, in another embodiment provided in this application, the protrusion 41 may alternatively be disposed on the movable stage 21. FIG. 14 is a diagram of another example of a movable stage 21 according to an embodiment of this application. As shown in FIG. 14, the protrusion 41 is fixedly disposed on the movable stage 21, and a surface that is of the bottom wall 31 and that faces the movable stage 21 is slidably connected to the protrusion 41.

Optionally, the shape of the protrusion 41 may be a hemisphere, a cylinder, a conical frustum, a cube, or the like.

Optionally, a side opposite to the protrusion 41, namely, the movable stage 21 or the bottom wall 31, may also be subject to self-lubricating processing.

In the foregoing embodiment, the support structure 40 is designed as the protrusion 41, so that the ball 42 may not be used, thereby completely resolving the problem of "shaking and noise of the ball 42" in the related technology. In addition, the ball 42 limiting structure disposed on the movable stage 21 or the bottom wall 31, such as the accommodation groove 211 mentioned above, may also be omitted. This reduces the production costs of the movable stage 21 or the base 30, and also completely resolves the problem of preventing the ball 42 from falling off, thereby ensuring the anti-vibration effect of the camera module 100.

As mentioned above, in this embodiment of this application, when the ball 42 is used as the support structure 40, the friction resistance when the movable stage 21 translates relative to the base 30 can be reduced. Therefore, a sliding contact end surface of the protrusion 41 may also be lubricated, to achieve the low friction resistance effect like the rolling friction force.

In an embodiment provided in this application, the protrusion 41 has the same base material as the movable stage 21, the protrusion 41 and the movable stage 21 are integrally formed, and a wear-resistant coating is provided at an end that is of the protrusion 41 and that is in contact with the bottom wall 31, so that the protrusion 41 has the self-lubricating effect and wear resistance. Alternatively, in another embodiment provided in this application, a solid lubricant may be applied to the end that is of the protrusion 41 and that is in contact with the bottom wall 31.

In an embodiment provided in this application, the protrusion 41 has the same base material as the base 30, the protrusion 41 and the base 30 are integrally formed, and a wear-resistant coating is provided at an end that is of the protrusion 41 and that is in contact with the movable stage 21, so that the protrusion 41 has the self-lubricating effect and wear resistance. Alternatively, in another embodiment provided in this application, a solid lubricant may be applied to the end that is of the protrusion 41 and that is in contact with the movable stage 21.

Optionally, the wear-resistant coating may be a diamond like carbon (Diamond like Carbon, DLC) coating, which has wear resistance and self lubricity and may be deposited through physical vapor deposition (Physical Vapor Deposition, PVD) and chemical vapor deposition (Chemical Vapor Deposition, CVD).

In addition to the foregoing cases, the protrusion 41 may alternatively be directly fabricated from a self-lubricating material. To be specific, in an embodiment provided in this application, the material of the protrusion 41 is a self-lubricating material.

Optionally, the self-lubricating material may be engineering plastics, such as polytetrafluoroethylene (Polytetrafluoroethylene, PTFE), polyformaldehyde (Polyformaldehyde, POM), polycarbonate (Polycarbonate, PC), polyamide (Polyamide, PA), and the like.

The self-lubricating material used in this embodiment can reduce friction resistance when the protrusion 41 slides on the movable stage 21 or the bottom wall 31, thereby reducing energy loss of the image stabilization mechanism 20 and improving flexibility of the movable stage 21 during translation.

Optionally, the bottom wall 31 is square or substantially square in shape. To reduce the quantity of parts to the minimum, as shown in FIG. 12, in an embodiment provided this application, a protrusion 41 may be disposed at each of only four corner positions of the bottom wall 31. Similarly, in another embodiment provided in this application, four balls 42 are respectively disposed at the four corner positions of the bottom wall 31.

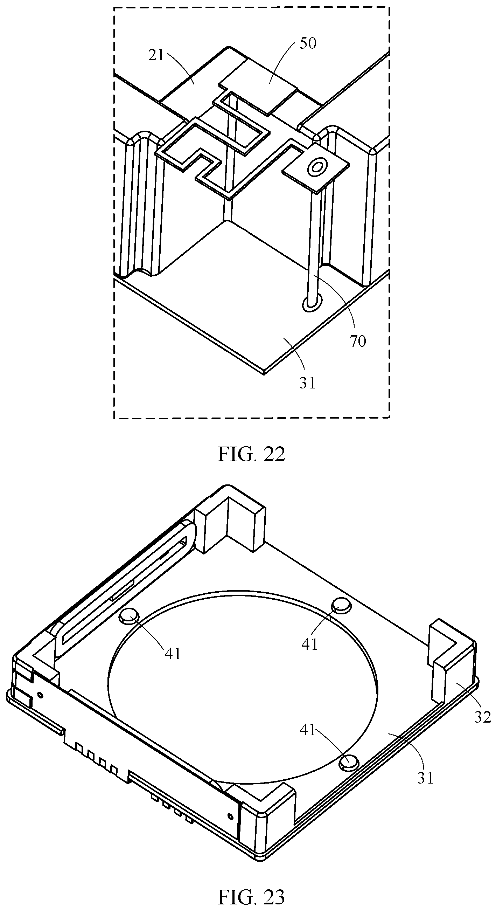

FIG. 23 is a diagram of another example of a base 30 according to an embodiment of this application. As shown in FIG. 23, in an embodiment provided in this application, four protrusions 41 are respectively disposed in the middle of four side edges of the bottom wall 31. Similarly, in another embodiment provided in this application, four balls 42 are respectively disposed in the middle of four side edges of the bottom wall 31.

As mentioned above, in this embodiment of this application, in addition to using the elastic suspension element to connect the movable stage 21 and the base 30 together, the movable stage 21 and the base 30 may alternatively be connected together through magnetic attraction, as described in the technical solutions provided in the following embodiment.

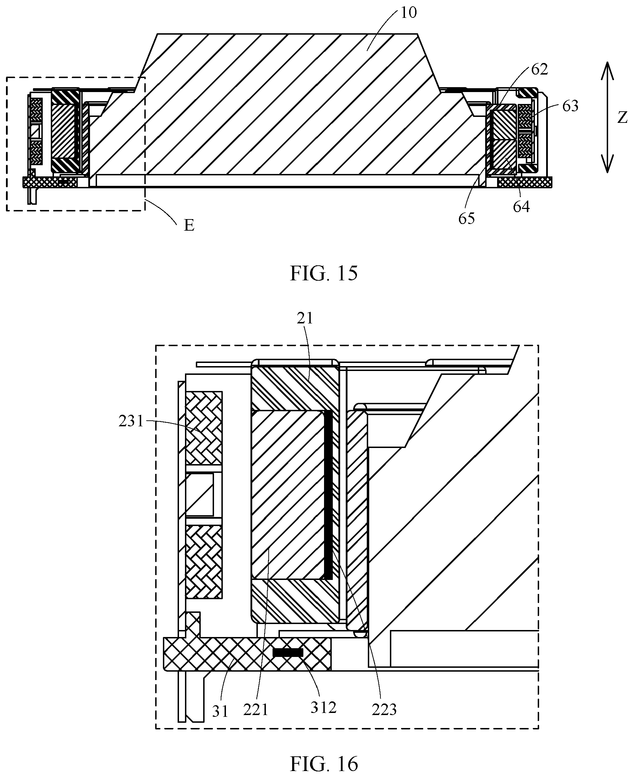

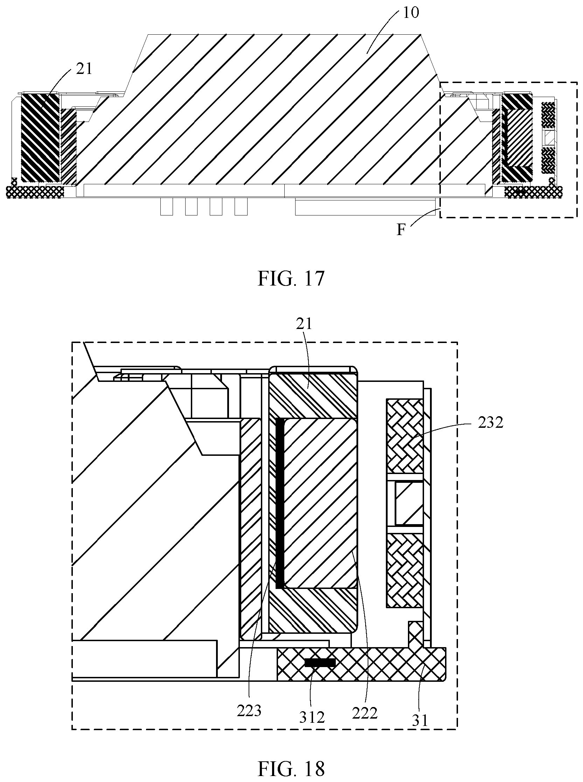

FIG. 15 is a cross-sectional diagram along B-B in FIG. 7. FIG. 16 is an enlarged view at E in FIG. 15. FIG. 17 is a cross-sectional diagram along C-C in FIG. 7. FIG. 18 is an enlarged view at F in FIG. 17.

Further, as shown in FIG. 5, FIG. 6, and FIG. 15 to FIG. 18, in an embodiment provided in this application, the mover assembly 22 includes a magnetic assembly fixedly disposed on the movable stage 21, and the bottom wall 31 is provided with a magnetic mating component 312 attracted by the magnetic assembly.

In the related technology, a combination of an elastic piece and a suspension wire is usually used as the elastic suspension element, and two ends of the suspension wire are respectively connected to the movable stage 21 and the base 30, so that the movable stage 21 and the base 30 are connected together, to prevent the movable stage 21 from separating from the base 30. When the lens assembly 10 is relatively heavy, the load on the suspension wire is relatively large, and the suspension wire is easily deformed or broken. In addition, the suspension wire has elasticity, which enables changes of the lens assembly 10 in the direction of gravity and the direction against gravity to form different extensions and retractions. As a result, a problem of sensing difference caused by the lens assembly 10 when the lens assembly 10 changes in various postures occurs in terms of performance, resulting in inaccurate compensation for the lens assembly 10.

In this embodiment, the magnetic assembly attracts the magnetic mating component 312, so that use of fragile structures such as a suspension wire can be avoided. In addition, because the movable stage 21 is tightly attracted to the base 30 through magnetic attraction, regardless of whether the lens assembly 10 is in the direction of gravity or in the direction against gravity, or whether the lens assembly 10 changes instantaneously from the direction of gravity to the direction against gravity , there is no compensation sensing difference caused by the posture change of the lens assembly 10, so that image stabilization displacement compensation can be accurately performed on the lens assembly 10.

Further, as shown in FIG. 16 and FIG. 18, in an embodiment provided in this application, projections of the magnetic assembly and the magnetic mating component 312 on a surface of the bottom wall 31 at least partially overlap.

This embodiment may also be understood as that the magnetic assembly is disposed opposite to the magnetic mating component 312 in the longitudinal direction (namely, the thickness direction or the Z direction), so that attraction force of the magnetic assembly to the magnetic mating component 312 is longitudinally directed, to avoid occurrence of a lateral force component that causes the movable stage 21 to deflect.

Optionally, the material of the magnetic mating component 312 is a cold-rolled carbon steel sheet, a ferritic stainless steel sheet, a silicon steel sheet, or the like.

Further, as shown in FIG. 16 and FIG, 18, in an embodiment provided in this application, the magnetic mating component 312 is embedded inside the bottom wall 31.

In this embodiment, when the magnetic mating component 312 is embedded inside the bottom wall 31, a surface of the bottom wall 31 can be ensured to be smooth and free of a foreign matter, to prevent the image stabilization mechanism 20 from interfering with and obstructing the movable stage 21 when performing the optical image stabilization function. In addition, embedding the magnetic mating component 312 inside the bottom wall 31 also has the effect of strengthening and toughening the base 30, thereby improving the mechanical strength and service life of the base 30.

Further, as shown in FIG. 5, in an embodiment provided in this application, the image stabilization mechanism 20 further includes a stator assembly 23, the stator assembly 23 includes an X-direction electromagnetic coil 231 and a Y-direction electromagnetic coil 232 disposed on two adjacent sides of the base 30, and the X-direction electromagnetic coil 231 and the Y-direction electromagnetic coil 232 are located on a periphery of the movable stage 21.

The magnetic assembly includes an X-direction magnetic member 221 and a Y-direction magnetic member 222, where the X-direction magnetic member 221 is disposed on a side that is of the movable stage 21 and that faces the X-direction electromagnetic coil 231, and the Y-direction magnetic member 222 is disposed on a side that is of the movable stage 21 and that faces the Y-direction electromagnetic coil 232.

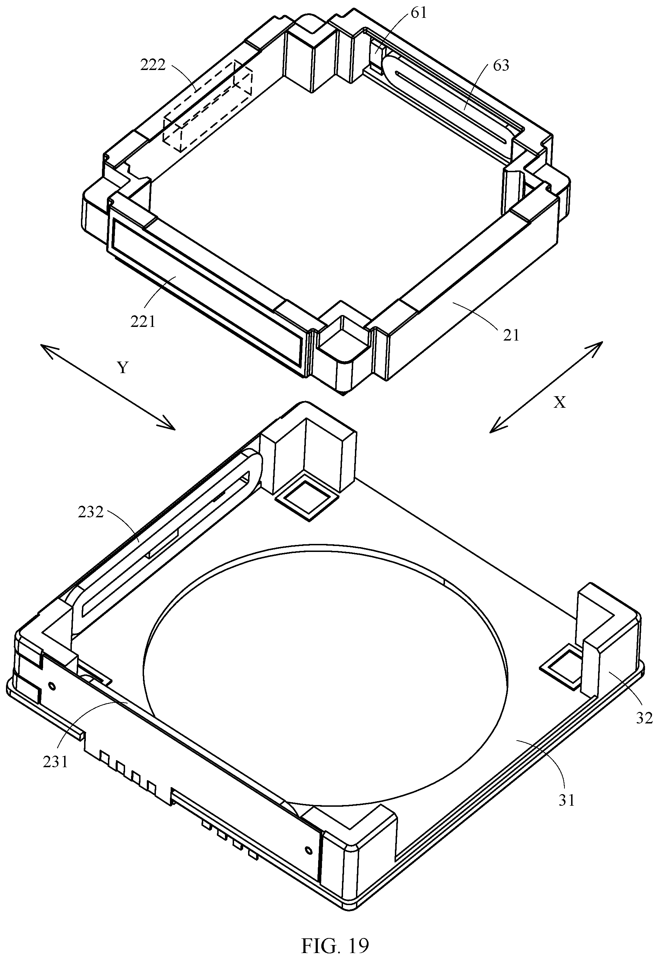

FIG. 19 is a diagram of separation between a base 30 and a movable stage 21 according to an embodiment of this application.

As shown in FIG. 19, the working principle of this embodiment is as follows: The X-direction magnetic member 221 is driven by the X-direction electromagnetic coil 231 to drive the movable stage 21 to move in the X direction; and the Y-direction magnetic member 222 is driven by the Y-direction electromagnetic coil 232 to drive the movable stage 21 to move in the Y direction.

In this embodiment, in this way, the magnetic assembly has a dual role, not only for attracting the magnetic mating component 312 to connect the movable stage 21 to the base 30, but also as an electromagnetic induction magnet for being electromagnetically driven to drive the movable stage 21 to translate.

Optionally, when the X-direction magnetic member 221 and the Y-direction magnetic member 222 are fixedly connected to the movable stage 21, the connection may be bonding by using an adhesive, locking by using screws, insertion by using a socket and spigot structure, or snapping by using a snap-fit structure, or a groove is provided on an opposite surface of the movable stage 21, and the X-direction magnetic member 221 and the Y-direction magnetic member 222 are embedded and fastened in the groove.

In an embodiment provided in this application, the mover assembly 22 further includes first magnetic conductive sheets 223, and two first magnetic conductive sheets 223 are respectively fixedly disposed on the X-direction magnetic member 221 and the Y-direction magnetic member 222.

In this embodiment, the first magnetic conductive sheet 223 is a paramagnetic material that has the function of changing a magnetic field direction and converging magnetic fields in a magnetic circuit, so that magnetic field strengths of the X-direction magnetic member 221 and the Y-direction magnetic member 222 can be enhanced, making the X-direction magnetic member 221 and the Y-direction magnetic member 222 more sensitive when being electromagnetically driven.

Optionally, the material of the first magnetic conductive sheet 223 is a cold-rolled carbon steel sheet, a ferritic stainless steel sheet, a silicon steel sheet, or the like.

As mentioned above, the magnetic mating component 312 is attracted by the magnetic assembly, so that the movable stage 21 and the base 30 are connected together. Therefore, a suspension wire may not be used to provide the longitudinal supporting force. However, elastic reset force further needs to be applied to the movable stage 21 in the lateral or radial direction of the lens assembly 10, so that the movable stage 21 can carry the lens assembly 10 and maintain the lens assembly 10 near the center of the optical axis without being subject to force.

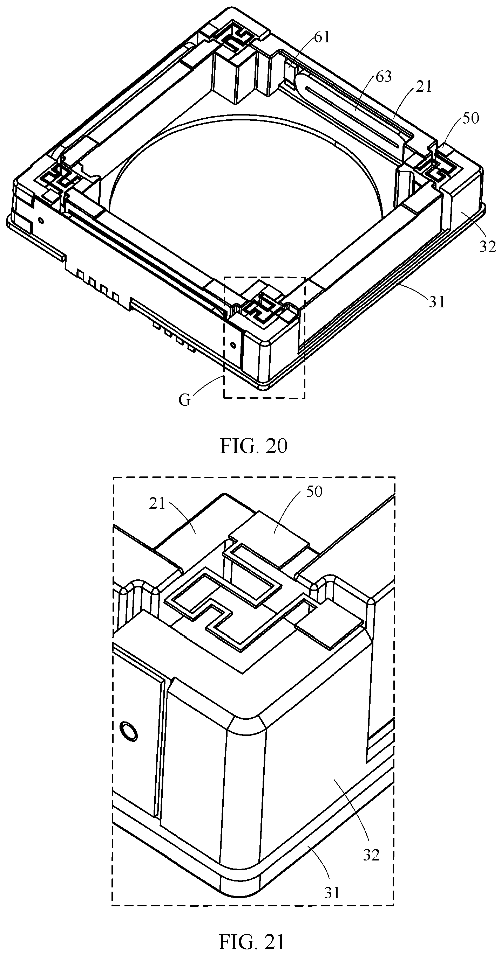

FIG. 20 is a diagram of assembly of the base 30 and the movable stage 21 in FIG. 19.

As shown in FIG. 20, to achieve the foregoing effect, in an embodiment provided in this application, the camera module 100 further includes an elastic member 50, configured to elastically connect the movable stage 21 to the base 30.

There may be four elastic members 50 in this embodiment, which are respectively disposed at four corners or in the middle of four side edges of the movable stage 21. Two ends of each elastic member 50 are respectively connected to the movable stage 21 and the base 30, and elastic reset force is preset for each elastic member 50. The four elastic members 50 generate balanced elastic reset force, which can enable the movable stage 21 to stay in the middle of the base 30 without being subject to force, so that the lens assembly 10 located on the movable stage 21 can be maintained near the center of the optical axis.

Optionally, the elastic member 50 may be a leaf spring or a cylindrical spring.

FIG. 21 is an enlarged view of an example at G in FIG. 20.

To conveniently mount the elastic member 50 fixedly, as shown in FIG. 21, in an embodiment provided in this application, the base 30 further includes a column 32 fixedly disposed at a corner position of the bottom wall 31, and the elastic member 50 is lamellar and two ends of the elastic member 50 are respectively connected to the column 32 and the movable stage 21.

The elastic member 50 in this embodiment is lamellar, the two ends of the elastic member 50 are connection parts with a relatively large area, and a middle part of the elastic member 50 is a bending part. The connecting parts at the two ends are respectively connected to the column 32 and a top surface of the movable stage 21, and the bending part in the middle is configured to store and release elastic potential energy.

It should be noted that the corner position may also be understood as a turning corner or a corner of the bottom wall 31. When the column 32 is disposed at the corner position of the bottom wall 31, the support structure 40 needs to be avoided.

As mentioned above, in this embodiment of this application, a combination of the elastic member 50 and the magnetic attraction manner may be used to connect the movable stage 21 and the base 30 together. Therefore, the elastic member 50 in this embodiment not only has a function of resetting the movable stage 21 in the middle of the base 30, but also provides longitudinal supporting force for the movable stage 21 and the base 30, to prevent the movable stage 21 and the base 30 from separating from each other.

FIG. 22 is an enlarged view of another example at G in FIG. 20.

As shown in FIG. 22, in an embodiment provided in this application, the camera module 100 further includes a suspension wire 70, where two ends of the suspension wire 70 are respectively connected to the bottom wall 31 and the elastic member 50.

In this embodiment, the suspension wire 70 is further introduced to reduce the design difficulty of the elastic member 50. This is because: when the elastic member 50 is designed, the elastic member 50 is bent and deformed for a plurality of times when elastic modulus of the elastic member 50 is determined or adjusted, making the design difficulty relatively high. After the suspension wire 70 and the elastic member 50 are combined with each other, the overall elastic modulus of the suspension wire 70 and the elastic member 50 can be determined or adjusted by adjusting the thickness and length of the suspension wire 70, and the corresponding design difficulty is relatively low.

Further, as shown in FIG. 6 and FIG. 15, in an embodiment provided in this application, the camera module 100 further includes: the focusing mechanism 60, where the focusing mechanism 60 includes a focusing driver chip 61, and the focusing mechanism 60 also includes a lens holder 62, a guide post 66, a Z-direction electromagnetic coil 63, and a Z-direction magnetic member 64. The lens holder 62 is configured to mount the lens assembly 10. The lens holder 62 is slidably connected within the movable stage 21 by using the guide post 66. The lens holder 62 can be displaced in the Z direction or the thickness direction of the movable stage 21. The Z-direction electromagnetic coil 63 is fastened to an inner side wall of the movable stage 21, and the Z-direction magnetic member 64 is fastened to an outer side wall of the lens holder 62. The focusing driver chip 61 is configured to adjust the current direction and amplitude of the Z-direction electromagnetic coil 63, so as to generate different electromagnetic directions and strengths for magnetic mating with the Z-direction magnetic member 64, so that the Z-direction magnetic member 64 drives the lens holder 62 to carry the lens assembly 10 to reciprocate in the thickness direction of the movable stage 21, thereby implementing focusing.

Optionally, the focusing mechanism 60 further includes a second magnetic conductive sheet 65, where the second magnetic conductive sheet 65 is fastened to the Z-direction magnetic member 64 and can implement a function of converging the magnetic fields, thereby enhancing the magnetic fields around the Z-direction magnetic member 64 and making the Z-direction magnetic member 64 more sensitive when being electromagnetically driven.

Optionally, two Z-direction magnetic members 64 with opposite magnetic poles are provided, which can increase the magnetic flux density, in other words, increase the magnetic induction intensity, thereby strengthening the surrounding magnetic fields. The magnetic induction intensity is also referred to as magnetic flux density or flux density, and is a physical quantity that describes the strength and direction of the magnetic field. A larger value of the magnetic induction intensity indicates a stronger magnetic field.

To meet the power supply and data transmission requirements of the focusing driver chip 61 and conveniently electrically connect the focusing driver chip 61 to an external control main board, in this embodiment, the focusing driver chip 61 is electrically connected to a pin 311 disposed on the bottom wall 31 sequentially through the movable stage 21, the elastic member 50, and the base 30, and the pin 311 is configured to electrically connect to the external control main board.

Optionally, when an electrical connection relationship is established between the movable stage 21, the elastic member 50, and the base 30, a circuit coating may be disposed on the movable stage 21, the elastic member 50, and the base 30.

Specifically, the circuit coating may be formed on the movable stage 21, the elastic member 50, and the base 30 through laser direct structuring (Laser Direct Structuring, LDS); or may be formed on the movable stage 21, the elastic member 50, and the base 30 through printing direct structuring (Printing Direct Structure, PDS).

In an embodiment provided in this application, the focusing driver chip 61 is disposed on the movable stage 21 by using a circuit board 611, conductive members are respectively embedded in the movable stage 21 and the base 30, the elastic member 50 is provided with a conductive member, and the circuit board 611, the conductive member of the movable stage 21, the conductive member of the elastic member 50, and the conductive member of the base 30 are electrically connected in sequence.

In this embodiment, conductive circuits can all be located inside the parts or attached to the surface to prevent the conductive circuits from extending outward and causing interference and obstruction to the image stabilization and focusing mechanisms.

Optionally, the conductive member may be a copper wire, a bare wire, a conventional wire, a flexible flat cable (Flexible Flat Cable, FFC), or the like.

Optionally, the circuit board 611 may be a printed circuit board (Printed Circuit Board, PCB) or a flexible printed circuit (Flexible Printed Circuit, FPC).

In addition, the X-direction electromagnetic coil 231 and the Y-direction electromagnetic coil 232 of the image stabilization mechanism 20 mentioned above also have corresponding circuit boards and image stabilization driver chips, and the mounting design manner may be similar to that of the focusing mechanism 60. Details are not described herein again.

In the related technology, only one conductive member is disposed on a single elastic member 50 and corresponds to one circuit, but the driver chip 61 usually has a plurality of interfaces, and therefore requires a plurality of circuits. In this way, each elastic member 50 needs to be used, so that the plurality of circuits are dispersed on each elastic member 50. This causes a problem, to be specific, the internal conductive members of the corresponding movable stage 21 and the base 30 are also relatively dispersed, dispersed into a plurality of paths respectively connected to the corresponding elastic members 50. As a result, the difficulty of processing and producing the embedded conductive members of the movable stage 21 and the base 30 is increased.

Therefore, to resolve the foregoing problem, in an embodiment provided in this application, the single elastic member 50 has a plurality of conductive members. In this way, two to four circuits can be integrated by using a single elastic member 50, to prevent the internal conductive members of the movable stage 21 and the base 30 from being dispersed, thereby reducing the difficulty of producing and processing the conductive members embedded in the movable stage 21 and the base 30.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A camera module, comprising:
a lens assembly (10), configured to direct outgoing light to an image sensor;
an image stabilization mechanism (20), comprising a movable stage (21) and a mover assembly (22) that are connected to each other, wherein the movable stage (21) is configured to carry the lens assembly (10), and the mover assembly (22) is configured to be capable of being electromagnetically driven, to drive the movable stage (21) to move carrying the lens assembly (10);
a base (30), comprising a bottom wall (31) stacked with the movable stage (21); and
a support structure (40), disposed flat between opposite surfaces of the movable stage (21) and the bottom wall (31), wherein the support structure (40) can enable the movable stage (21) to translate in any direction parallel to a plane of the bottom wall (31).

2. The camera module according to claim 1, wherein the support structure (40) comprises a ball (42) rollably disposed between the movable stage (21) and the bottom wall (31).

3. The camera module according to claim 2, wherein a part that is of the bottom wall (31) and that corresponds to the ball (42) and/or a part that is of the movable stage (21) and that corresponds to the ball (42) have/has a reinforcement pad (421).

4. The camera module according to claim 2 or 3, wherein one of the bottom wall (31) and the movable stage (21) has an accommodation groove (211) limiting the ball (42).

5. The camera module according to claim 4, wherein the accommodation groove (211) is provided on the movable stage (21), and the accommodation groove (211) is formed by recessing a surface of the movable stage (21).

6. The camera module according to any one of claims 1 to 5, wherein the support structure (40) comprises a protrusion (41), the protrusion (41) is fixedly disposed on one of the bottom wall (31) and the movable stage (21), and the other is slidably connected to the protrusion (41).

7. The camera module according to claim 6, wherein the protrusion (41) is fixedly disposed on the bottom wall (31), and the movable stage (21) is slidably connected to the protrusion (41).

8. The camera module according to claim 6 or 7, wherein a material of the protrusion (41) is a self-lubricating material.

9. The camera module according to any one of claims 1 to 8, wherein the mover assembly (22) comprises a magnetic assembly fixedly disposed on the movable stage (21), and the bottom wall (31) is provided with a magnetic mating component (312) attracted by the magnetic assembly.

10. The camera module according to claim 9, wherein projections of the magnetic assembly and the magnetic mating component (312) on a surface of the bottom wall (31) at least partially overlap.

11. The camera module according to claim 9 or 10, wherein the magnetic mating component (312) is embedded inside the bottom wall (31).

12. The camera module according to any one of claims 9 to 11, wherein the image stabilization mechanism (20) further comprises a stator assembly (23), the stator assembly (23) comprises an X-direction electromagnetic coil (231) and a Y-direction electromagnetic coil (232) disposed on two adjacent sides of the base (30), and the X-direction electromagnetic coil (231) and the Y-direction electromagnetic coil (232) are located on a periphery of the movable stage (21); and
the magnetic assembly comprises an X-direction magnetic member (221) and a Y-direction magnetic member (222), wherein the X-direction magnetic member (221) is disposed on a side that is of the movable stage (21) and that faces the X-direction electromagnetic coil (231), and the Y-direction magnetic member (222) is disposed on a side that is of the movable stage (21) and that faces the Y-direction electromagnetic coil (232).

13. The camera module according to claim 12, wherein the mover assembly (22) further comprises first magnetic conductive sheets (223), and two first magnetic conductive sheets (223) are respectively fixedly disposed on the X-direction magnetic member (221) and the Y-direction magnetic member (222).

14. The camera module according to any one of claims 1 to 13, further comprising:
an elastic member (50), configured to elastically connect the movable stage (21) to the base (30).

15. The camera module according to claim 14, wherein the base (30) further comprises a column (32) fixedly disposed at a corner position of the bottom wall (31), and the elastic member (50) is lamellar and two ends of the elastic member (50) are respectively connected to the column (32) and the movable stage (21).

16. The camera module according to claim 14, further comprising:
a suspension wire (70), wherein two ends of the suspension wire (70) are respectively connected to the bottom wall (31) and the elastic member (50).

17. The camera module according to claim 14 or 15, further comprising:
a focusing mechanism (60), wherein the focusing mechanism (60) comprises a driver chip (61), and the driver chip (61) is electrically connected to a pin (311) disposed on the bottom wall (31) sequentially through the movable stage (21), the elastic member (50), and the base (30).

18. The camera module according to claim 17, wherein the driver chip (61) is disposed on a circuit board (611), conductive members are respectively embedded in the movable stage (21) and the base (30), the elastic member (50) is provided with a conductive member, and the circuit board (611), the conductive member of the movable stage (21), the conductive member of the elastic member (50), the conductive member of the base (30), and the pin (311) are electrically connected in sequence.

19. The camera module according to claim 18, wherein the single elastic member (50) has a plurality of conductive members.

20. The camera module according to claim 6 or 7, wherein a wear-resistant coating is disposed on a surface of the protrusion (41).

21. The camera module according to claim 8, wherein the self-lubricating material comprises at least one of polytetrafluoroethylene, polyformaldehyde, polycarbonate, and polyamide.

22. The camera module according to claim 3, wherein a material of the reinforcement pad (421) is carbon fiber or metal.

23. The camera module according to any one of claims 1 to 22, wherein the support structure (40) is distributed at the corner position of the bottom wall (31).

24. An electronic device, comprising a case (200) and the camera module (100) according to any one of claims 1 to 23, wherein the camera module (100) is mounted inside the case (200).
